**Europäisches Patentamt**

**European Patent Office**

**Office européen des brevets**

(19)

(11) Veröffentlichungsnummer: **0 080 754**

**A1**

(12) **EUROPÄISCHE PATENTANMELDUNG**

(21) Anmeldenummer: **82201428.8**

(22) Anmeldetag: **11.11.82**

(51) Int. Cl.³: **B 01 D 46/04**

(30) Priorität: **02.12.81 DE 3147636**

(43) Veröffentlichungstag der Anmeldung:
**08.06.83 Patentblatt 83/23**

(84) Benannte Vertragsstaaten:
**DE FR GB IT**

(71) Anmelder: **METALLGESELLSCHAFT AG**
**Reuterweg 14 Postfach 3724**
**D-6000 Frankfurt/M.1(DE)**

(72) Erfinder: **Schindling, Josef**
**Karl-Schüler Weg 3**
**D-6230 Frankfurt am Main 80(DE)**

(72) Erfinder: **Schlaffer, Herbert**
**Uhlandstrasse 15**
**D-6092 Kelsterbach(DE)**

(74) Vertreter: **Fischer, Ernst, Dr.**
**Reuterweg 14**
**D-6000 Frankfurt am Main 1(DE)**

(54) **Verfahren und Vorrichtung zum Abreinigen von Filterschläuchen.**

(57) Das Abreinigen der von staubhaltigem Gas von außen nach innen beaufschlagten Filterschläuche erfolgt durch einen Druckstoß mittels Spülluft. Bei unterbrochener Strömung des staubhaltigen Gases wird durch Entspannen eines mit der Spülluft gefüllten Behälters ein Druckstoß erzeugt, der in einen Reingassammelraum geleitet wird. In diesem Reingassammelraum liegen die Mündungen der Filterschläuche. Vor der Entspannung steht die Spülluft unter einem Druck von 1,1 - 1,5 bar. Der Reingassammelraum gehört zu einer absperrbaren Filterkammer mit mindestens 200 Filterschläuchen.

EP 0 080 754 A1

Croydon Printing Company Ltd

METALLGESELLSCHAFT AG                Frankfurt, 30.11.1981
    Nr. 8696 LT                      -WGN/HSZ-

**0080754**

Verfahren und Vorrichtung zum Abreinigen
von Filterschläuchen

Die Erfindung betrifft ein Verfahren zum Abreinigen hohler,
von staubhaltigem Gas von außen nach innen beaufschlagter,
rohgasseitig geschlossener Filterschläuche durch einen
Druckstoß mittels Spülluft.

Bei Schlauchfiltern sammelt sich während des Filterbetriebs
an der Außenseite der schlauch- oder taschenförmigen Filterelemente ein Staubbelag an, der periodisch abgereinigt werden
muß. Hierzu leitet man bei sogenannten Jet-Filtern über Rohre
mit jedem Filterschlauch zugeordneten Austrittsöffnungen stoßweise Druckluft von mehr als 3 bar in die Filterelemente, die
dabei aufgeweitet werden, so daß der Staubbelag abfällt und
nach unten in einen Staubsammelbehälter fällt. Dieses Abreinigungssystem ist jedoch für Filter mit sehr vielen Schläuchen
apparativ ziemlich aufwendig und mit einem hohen Energieverbrauch verbunden.

Der Erfindung liegt deshalb die Aufgabe zugrunde, die Abreinigung von großen Filtern, die eine große Anzahl von Filterschläuchen enthalten, auf einfache und wirksame Weise mit
geringem Energieaufwand durchzuführen. Beim Verfahren der
eingangs genannten Art wird dies dadurch erreicht, daß bei
unterbrochener Strömung des staubhaltigen Gases ein Druckstoß,
erzeugt durch mindestens teilweises Entspannen eines mit Spülluft gefüllten Behälters, in den an die Mündungen der Filterschläuche anschließenden Reingassammelraum geleitet wird.

2

Vom Reingassammelraum setzt sich der Druckstoß direkt in die
Filterschläuche hinein fort, ohne daß es zusätzlicher Leitungsmechanismen bedarf.

Bevorzugterweise gehört der Reingassammelraum zu einer
absperrbaren Filterkammer mit mindestens 200 Filterschläuchen.
Üblicherweise besitzt das Filter mindestens 4 Filterkammern
und ist so dimensioniert, daß während des Filterbetriebs
mindestens 30 m$^3$ Gas pro Sekunde durch eine Filterkammer
geleitet werden.

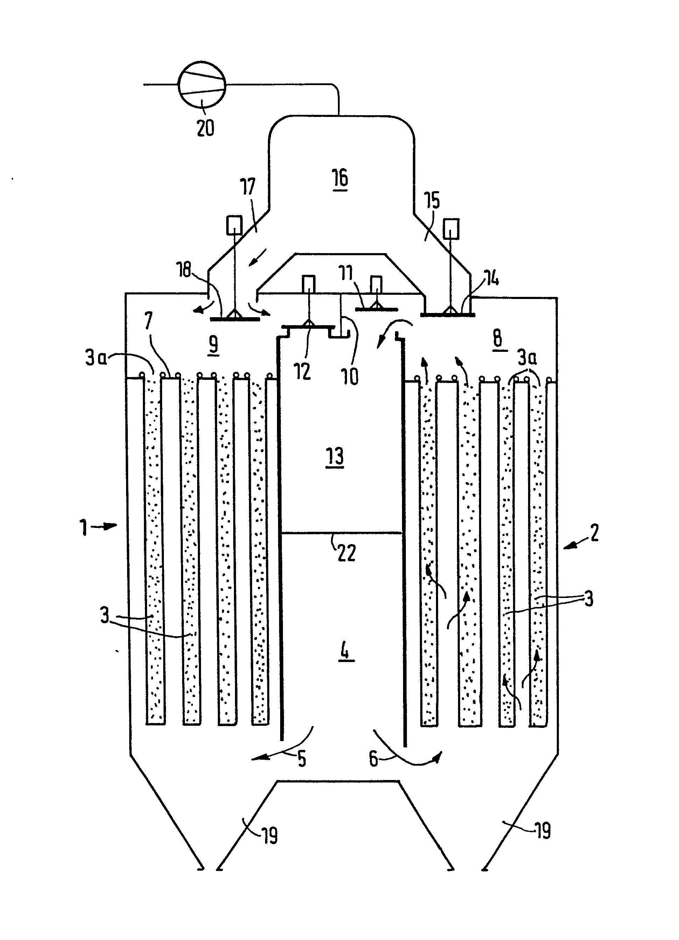

Einzelheiten des Verfahrens und der zugehörigen Vorrichtung
werden mit Hilfe der Zeichnung erläutert.

Das schematisch dargestellte Filter besitzt zwei Filterkammern 1 und 2 mit einer großen Anzahl von Filterschläuchen 3.
Die Filterschläuche werden durch ein Spannsystem in Form
gehalten, das der Einfachheit halber nicht dargestellt ist.
Anstelle von Filterschläuchen können auch taschenartige
Filterelemente verwendet werden.

Das zu reinigende Rohgas kommt aus einem zentralen Rohgaskanal 4 und strömt in Richtung der Pfeile 5 und 6 von unten
nach oben durch die Filterkammern 1 und 2 und tritt dabei durch
die Außenseite eines jeden Filterschlauchs 3 hindurch in dessen
Innenraum. Die Mündungen 3a der Schläuche 3 liegen in einem
Boden 7 des anschließenden Reingassammelraums 8 bzw. 9.
Zu jeder Filterkammer gehört ein einziger Reingassammelraum.
Zwischen benachbarten Sammelräumen 8, 9 liegt eine Trennwand 10
und jeder Sammelraum besitzt einen durch eine Klappe 11 bzw. 12
verschließbaren Auslaß, von dem das Reingas in die Ableitung 13
mündet. Zwischen der Reingas-Ableitung 13 und dem Rohgas-Zufuhrkanal 4 liegt die Trennwand 22.

Im Filter der Zeichnung ist die rechte Filterkammer 2 in den Filterbetrieb geschaltet, wobei die Klappe 11 geöffnet und das Ventil 14 der Leitung 15 geschlossen ist. Die linke Filterkammer 1 befindet sich in der Abreinigungsphase, wobei die Klappe 12 den zugehörigen Auslaß verschließt, so daß das Rohgas nicht durch diese Kammer strömen kann. Aus dem mit Luft von geringem Überdruck gefüllten Behälter 16 wird durch die Leitung 17 durch schlagartiges Öffnen des Ventils 18 ein Druckstoß in den Reingassammelraum 9 geleitet, der sich in die Filterschläuche 3 hinein fortsetzt und den an deren Außenseiten angesetzten Staub zum Abfallen bringt. Der Staub fällt nach unten in den Staubbunker 19.

Durch ein Gebläse 20 wird dafür gesorgt, daß im Behälter 16 außerhalb der Abreinigungsphasen ein Spülluftvorrat bereitgehalten wird, der unter einem Druck von 1,1 bis 1,5 bar, vorzugsweise 1,15 bis 1,3 bar, steht. Selbstverständlich kann anstelle von Luft auch ein anderes Gas in den Behälter 16 gegeben werden.

Patentansprüche

1) Verfahren zum Abreinigen hohler, von staubhaltigem Gas von außen nach innen beaufschlagter, rohgasseitig geschlossener Filterschläuche durch einen Druckstoß mittels Spülluft, dadurch gekennzeichnet, daß bei unterbrochener Strömung des staubhaltigen Gases ein Druckstoß, erzeugt durch mindestens teilweises Entspannen eines mit Spülluft gefüllten Behälters, in den an die Mündungen der Filterschläuche anschließenden Reingassammelraum geleitet wird.

2) Verfahren nach Anspruch 1, dadurch gekennzeichnet, daß die Luft im Behälter vor der Entspannung unter einem Druck von 1,1 bis 1,5 bar steht.

3) Vorrichtung zum Abreinigen hohler, von staubhaltigem Gas von außen nach innen beaufschlagter, rohgasseitig geschlossener Filterschläuche durch einen Druckstoß mittels Spülluft, gekennzeichnet durch einen Spülluftbehälter, der über eine einzige absperrbare Leitung mit einem Reingassammelraum verbunden ist, wobei die Filterschläuche reingasseitig im Sammelraum münden.

4) Vorrichtung nach Anspruch 3, dadurch gekennzeichnet, daß der Reingassammelraum zu einer absperrbaren Filterkammer mit mindestens 200 Filterschläuchen gehört.

5) Vorrichtung nach Anspruch 4, dadurch gekennzeichnet, daß das Filter mindestens vier Filterkammern aufweist.

6) Vorrichtung nach Anspruch 4 oder 5, dadurch gekennzeichnet, daß während des Filterbetriebs mindestens 30 $m^3$ Gas pro Sekunde durch eine Filterkammer geleitet werden.

0080754

# 0080754
Nummer der Anmeldung

**Europäisches Patentamt**

# EUROPÄISCHER RECHERCHENBERICHT

EP 82 20 1428.8

| | EINSCHLÄGIGE DOKUMENTE | | | KLASSIFIKATION DER ANMELDUNG (Int Cl ³) |
|---|---|---|---|---|
| Kategorie | Kennzeichnung des Dokuments mit Angabe, soweit erforderlich, der maßgeblichen Teile | | betrifft Anspruch | |
| X | AT - B - 302 371 (J. PAUSCH) <br> * Ansprüche 1 bis 3 ; Seite 5, Zeilen 3 bis 7 * <br> -- | | 1,3 | B 01 D 46/04 |
| X | DE - B - 1 757 515 (STANDARD FILTERBAU) <br> * Ansprüche 1, 3 bis 5 ; Spalte 2, Zeile 62 bis Spalte 3, Zeile 27 ; Fig. 1, 2 * <br> -- | | 1,3 | |
| | | | | RECHERCHIERTE SACHGEBIETE (Int. Cl.³) |
| A | US - A - 4 277 255 (R.G. APELGREN) <br> * Anspruch 1 ; Spalte 4, Zeilen 43 bis 60 ; Fig. * <br> ---- | | 1,4-6 | B 01 D 46/00 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veroffentlicht worden ist
D: in der Anmeldung angefuhrtes Dokument
L aus andern Grunden angefuhrtes Dokument

&: Mitglied der gleichen Patentfamilie, ubereinstimmendes Dokument

| X | Der vorliegende Recherchenbericht wurde fur alle Patentanspruche erstellt | | |
|---|---|---|---|
| Recherchenort <br> Berlin | Abschlußdatum der Recherche <br> 20-12-1982 | Prufer <br> BERTRAM | |

EPA form 1503.1 06.78